# EUROPÄISCHE PATENTANMELDUNG

(11) **EP 4 082 889 A1**
(43) Veröffentlichungstag der Anmeldung: **02.11.2022**
(21) Anmeldenummer: 21171122.1
(22) Anmeldetag: 29.04.2021
(51) Int. Cl.: B63B 34/52, B62B 13/10, B62B 13/14, B62B 15/00, B63B 34/54, B63H 16/08, B63H 16/20

(54) **FORTBEWEGUNGSMITTEL AUF WASSER UND SCHNEE**

(71) Anmelder: Constreq GmbH, 5617 Tennwil (CH)
(72) Erfinder: Lanz, Jan, 5616 Meisterschwanden (CH)
(74) Vertreter: Fenner, Seraina

(57) **Zusammenfassung**

Vorrichtung zur Fortbewegung auf einer Schneeoberfläche und/oder auf Wasser enthaltend, einen aufblasbaren Körper, wobei der Körper im aufgeblasenen Zustand mindestens eine Sitzfläche aufweist, ein Cockpit, wobei das Cockpit eine stabile Basiseinheit bildet, eine Lenkung, wobei die Lenkung ein Lenkelement, eine Lenkstange und ein Richtungsgeberelement aufweist und das Richtungsgeberelement über die Lenkstange mit dem Lenkelement verbunden ist, wobei das Richtungsgeberelementen den Einsatzbereich ob auf einer Schneeoberfläche oder auf Wasser vorgibt, wobei das Richtungsgeberelement austauschbar an der Lenkstange angeordnet ist, entsprechend des Einsatzbereichs.

## Beschreibung

Die Erfindung betrifft eine Vorrichtung zur Fortbewegung auf einer Schneeoberfläche und/oder auf Wasser enthaltend, einen aufblasbaren Körper, wobei der Körper im aufgeblasenen Zustand mindestens eine Sitzfläche aufweist, ein Cockpit, wobei das Cockpit eine stabile Basiseinheit bildet, eine Lenkung, wobei die Lenkung ein Lenkelement, eine Lenkstange und ein Richtungsgeberelement aufweist und das Richtungsgeberelement über die Lenkstange mit dem Lenkelement verbunden ist, wobei das Richtungsgeberelementen den Einsatzbereich ob auf einer Schneeoberfläche oder auf Wasser vorgibt sowie die Verwendung der erfindungsgemässen Vorrichtung.

Aus dem Stand der Technik sind Fortbewegungsmittel bekannt, die entweder auf dem Wasser oder auf einer Schneeoberfläche einsetzbar sind. Das bedeutet für den Nutzer, wenn er auf beiden Unterlagen ein Fortbewegungsmittel möchte, muss er sowohl ein Fortbewegungsgerät für eine Anwendung auf dem Wasser, das meist im Sommer genutzt wird, und eines für auf der Schneeoberflächen das in der Regel im Winter zum Einsatz kommt, haben. Auch für Sportgerätevermieter deren Einzugsgebiet am Wasser liegt, wie auch schneebedeckte Hügel sind, sind das enorme Kosten sowie auch ein grosser Platzbedarf zur Lagerung der Fortbewegungsmittel, in der Zeit in der die Fortbewegungsgeräte auf dem Wasser oder der Schneeoberfläche nicht genutzt werden können, sei es entsprechend meist im Sommer oder im Winter.

Die US 2020/0277037 A1 offenbart ein schleppbares Boot das aufblasbar ist jedoch, ist das Boot ausschliesslich auf dem Wasser einsetzbar und weist zur Lenkung ein fest montiertes Ruder auf.

Die DE 1 908 522 A1 offenbart eine Vorrichtung die gleit-und schwimmfähig ist und eine aufblasbare Hülle aufweist, jedoch lässt sie sich nicht steuern bzw. nur durch Gewichtsverlagerung.

Es ist Aufgabe der Erfindung eine lenkbare Vorrichtung zur Fortbewegung vorzuschlagen, die sowohl auf dem Wasser wie auch auf der Schneeoberfläche eingesetzt werden kann und dazu keine grossen Umbauten getätigt werden müssen bzw. jeder Nutzer selbst umbauen kann, sowie die Vorrichtung bei Nichtgebrauch platzsparend lagerbar sein soll.

Erfindungsgemäss wurde die Aufgabe dadurch gelöst, dass das Richtungsgeberelement austauschbar an der Lenkstange angeordnet ist und entsprechend des Einsatzbereichs als Ruder oder gleitfähige Sohle ausgebildet ist.

Die erfindungsgemässe Vorrichtung zur Fortbewegung auf einer Schneeoberfläche und/oder auf Wasser beinhaltet einen aufblasbaren Körper, wobei der Körper im aufgeblasenen Zustand mindestens eine Sitzfläche aufweist. Selbstverständlich sind auch mehrerer Sitzflächen vorstellbar, die vorzugsweise hintereinander angeordneten sind und vorzugsweise Sitzlehnen aufweisen. Die erfindungsgemässe Vorrichtung beinhaltet zudem ein Cockpit, wobei das Cockpit eine stabile Basiseinheit bildet. Das Cockpit ist nicht aufblasbar sondern vorzugsweise aus einem stabilen Kunststoff gebildet. Der aufblasbare Körper ist fest am Cockpit angeordnet bzw. mit diesem fest verbunden, wodurch das Cockpit eine Art stabile Basiseinheit bildet. Die erfindungsgemässe Vorrichtung enthält ebenso eine Lenkung, wobei die Lenkung ein Lenkelement, eine Lenkstange und ein Richtungsgeberelement aufweist und das Richtungsgeberelement über die Lenkstange mit dem Lenkelement verbunden ist. Es ist vorteilhaft wenn die Lenkstange durch das Cockpit hindurch ragt und am oberen Ende das Lenkelement und am unteren Ende das Richtungsgeberelement angeordnet ist. Das Richtungsgeberelement gibt den Einsatzbereich vor, das heisst ob die erfindungsgemässe Vorrichtung auf einer Schneeoberfläche oder auf Wasser zum Einsatz kommt. Dazu ist das Richtungsgeberelement austauschbar an der Lenkstange angeordnet und entsprechend des Einsatzbereichs als Ruder oder gleitfähige Sohle ausgebildet. Das Richtungsgeberelement ist vorzugsweise mittels eines einfach lösbaren Schnellverschlusses am Ende der Lenkstange angeordnet, was einen schnellen und einfachen Austausch, vorzugsweise ohne Hilfsmittel, ermöglicht.

Es ist vorteilhaft wenn der aufblasbare Körper aus einem strapazierfähigen Kunststoff ist. In nicht aufgeblasenem Zustand kann die Grösse der Vorrichtung minimiert werden um dadurch platzsparend gelagert zu werden.

Als bevorzugte Ausführungsform hat sich gezeigt, wenn um den Umfang des aufblasbaren Körpers herum ein Band zur Versteifung angebracht ist, das gibt dem aufblasbaren Körper mehr Stabilität und lässt ihn aber dennoch auf eine kompakte Form zusammenfalten wenn sich keine Luft darin befindet. Vorzugsweise sind die Bänder aus Stoff ausgebildet.

Vorzugswiese ist das Cockpit im vorderen Bereich des aufblasbaren Körpers angeordnet, wobei der aufblasbare Körper in aufgeblasenem Zustand eine längliche Form aufweist. Die Front des aufblasbaren Körpers weist vorzugsweise eine abgerundete Form auf, um den Widerstand zu verringern. Das Cockpit erstreckt sich vorzugsweise nicht über die komplette Breite des aufblasbaren Körpers sondern nur über einen Teilbereich in der Mitte, wodurch ermöglicht wird die Beine und Füsse des Fahrers links und rechts vom Cockpit zu platzieren.

Vorzugsweise ist die gleitfähige Sohle als Ski ausgebildet ist. Dadurch wird eine gute Lenkbarkeit der erfindungsgemässen Vorrichtung auf der Oberfläche des Schnees erzielt.

Als vorteilhaft hat sich gezeigt, wenn der aufblasbare Körper zwei parallel verlaufende Rümpfe aufweist und an der Unterseite sich dazwischen eine kanalförmige Vertiefung erstreckt. Dadurch erhält der aufblasbare Körper die Form eines Katamarans, wodurch die erfindungsgemässe Vorrichtung stabil auf dem Wasser oder der Schneeoberfläche liegt und dennoch einen relativ geringen Widerstand aufweist.

Der aufblasbare Körper beinhaltet vorzugsweise zwei parallel verlaufenden Rümpfe sowie eine parallel zwischen den Rümpfen verlaufende Vertiefung, wobei die Vertiefung unterhalb der Sitzfläche verläuft. Die Rümpfe schliessen durch eine abgerundete Front am vorderen Ende ab, wobei sich die abgerundete Front über die komplette Breite des aufblasbaren Körpers erstreckt.

Als vorteilhafte Ausgestaltung hat sich gezeigt, wenn die Sitzfläche bzw. Sitzflächen durch eine sich in der Mitte des aufblasbaren Körpers, in Längsrichtung erstreckende, erhabene Oberfläche gebildet ist, wobei die Sitzfläche gegenüber dem Rumpf erhaben ist. Dies ermöglicht eine komfortable Sitzposition für den Fahrer und Mitfahrer da die Füsse auf dem Rumpf oder die dafür vorgesehen Blenden oder Bremspedalen abgestellt werden können.

Als bevorzugte Ausführungsform hat sich gezeigt, wenn der aufblasbare Körper als eine durchgehende Luftkammer ausgebildet ist. Selbstverständlich kann bei Bedarf die Luftkammer in einzelne Kammern eingeteilt sein, welche aber untereinander mediumsverbunden sind. Das bedeutet, dass vorzugsweise die Rümpfe, die Vertiefung, die Sitzfläche und die abgerundete Front durch einen aufblasbaren Körper gebildet werden. Dies hat den Vorteil, dass der Körper nur über ein Ventil aufgeblasen werden muss und der vorherrschende Druck im aufgeblasenen Körper überall gleich ausfällt, wodurch die Lage auf dem Wasser und/oder der Schneeoberfläche konstant gerade ist.

Als vorteilhaft hat sich gezeigt, wenn das Cockpit als stabiles Kunststoffteil ausgebildet ist, wobei die Lenkstange durch das Cockpit hindurchragt und im Cockpit gelagert ist.
In einer bevorzugten Ausführungsform weist das Cockpit ein Ablagefach auf in dem der Fahrer Utensilien verstauen kann, vorzugsweise ist es unterhalb des Lenkelements angeordnet.

In einer bevorzugten Ausführungsform weist das Cockpit eine Verschraubung auf, an der eine Kamera befestigt werden kann um Bilder oder Videos während der Fahrt auf dem Wasser oder auf der Schneeoberfläche zu machen, wobei die Verschraubung vorzugsweise als Standardverschraubung für die Befestigung von Kameras ausgebildet ist, welche in der Regel als ¼" Verschraubung ausgebildet ist und im oberen Bereich des Cockpits angeordnet ist.

Es ist ebenso vorteilhaft, wenn das Lenkelement als Steuerrad ausgebildet ist, wobei auch andere Lenkelemente denkbar sind.

Es ist Vorteilhaft wenn das am oberen Ende der Lenkstange angeordnete Lenkelement abnehmbar ist und dadurch bei Nichtgebrauch und nach Ablassen der Luft, die erfindungsgemässe Vorrichtung auf engstem Raum verstaubar ist und kann so auch einfach transportiert werden. Als weitere Möglichkeit einer Ausgestaltung weist das Lenkelement bzw. Steuerrad eine Aufnahme für ein portables Anzeigegerät auf, vorzugsweise ein Handy.

Wie bereits zuvor erwähnt ist es vorteilhaft, wenn der aufblasbare Körper ein Ventil zum Aufblasen des kompletten Körpers aufweist. Zudem ist es vorteilhaft ein herkömmliches Standardventil für solche aufblasbaren Fortbewegungsmittel zu verwenden wie sie bereits für aufblasbare Stand-Up-Paddling-Boards verwendet werden.

Es hat sich als vorteilhaft gezeigt, wenn die Unterseite der beiden parallel verlaufenden Rümpfe eine Verstärkung aufweisen. Dies macht die erfindungsgemässe Vorrichtung strapazierbar und auch Steine die im Schnee oder Wasser hervortreten verursachen keinen Schaden am aufblasbaren Körper.

In einer bevorzugten Ausführungsform ist im Cockpit ein optional anbringbares Antriebsrad angeordnet. Das Antriebsrad wird vorzugsweise dann eingebaut, wenn die erfindungsgemässe Vorrichtung auf dem Wasser eingesetzt und als Tretboot betrieben werden soll. Alternativ besteht auch die Möglichkeit die erfindungsgemässe Vorrichtung auf dem Wasser mit Paddel voranzubringen, wobei diese vorzugsweise mittels einer Halterung an den Rümpfen der Vorrichtung angebracht sind.

Vorzugsweise ist das Antriebsrad mit Pedalen zum Antreiben verbunden ist. Die Lagerung des Antriebsrads sowie der Pedalen befindet sich im Cockpit, wobei die Pedalen seitlich über das Cockpit hinausragen und das Antriebsrad im Innern des Cockpits gelagert ist.
Beim Einsatz der erfindungsgemässen Vorrichtung auf der Schneeoberfläche ist das Antriebsrad nicht montiert und die seitlichen Öffnungen für die Pedalen mittels Blenden am Cockpit verschlossen.

In einer bevorzugten Ausführungsform weist die erfindungsgemässe Vorrichtung einsetzbare Fussbremsen auf. Die Fussbremsen kommen im Schnee zum Einsatz und werden am aufblasbaren Körper montiert um bei steilen Abfahrten einen sicheren Stopp zu gewährleisten. Die Bremsen weisen vorzugsweise an der Oberseite ein Bremspedal auf, welches direkt auf die Bremse, welche an der Unterseite des aufblasbaren Körpers angeordnet ist, wirkt.
Wenn die Fussbremse nicht benötigt wird, beispielsweise wenn die erfindungsgemässe Vorrichtung auf dem Wasser ist, werden die Öffnungen unten und oben mit Blenden verschlossen, wobei die Blenden an der Oberseite des aufblasbaren Körpers zur Fussablage dienen können.

Als weitere vorteilhafte Ausgestaltung weist das Cockpit einen Haken auf, an dem die erfindungsgemässe Vorrichtung befestigt werden kann um beispielsweise auf dem Wasser von einem Motorboot und auf dem Schnee von einem Motorschlitten abgeschleppt zu werden.

Vorzugsweise weist die erfindungsgemässe Vorrichtung ein Zugseil auf, welches im Cockpit ausziehbar angeordnet ist. Dadurch kann beispielsweise die erfindungsgemässe Vorrichtung gut von Hand gezogen werden, ohne dass ein zusätzliches Seil benötigt wird.

Es ist vorteilhaft, wenn die Vorrichtung Haltegriffe aufweist an denen sich der Mitfahrer festhalten kann, vorzugsweise sind diese an der Seiter der Lehne des Fahrers angeordnet.

Die Erfindung bezieht sich ebenfalls auf die Verwendung einer Vorrichtung die auf Wasser und/oder einer Schneeoberfläche einsetzbar ist, wobei entsprechend des Einsatzbereichs als Richtungsgeberelement ein Ruder oder eine gleitfähige Sohle an der Lenkstange angeordnet ist und das Ruder und die gleitfähige Sohle gegenseitig austauschbar sind.

Alle vorgenannten Ausführungsformen der Vorrichtung sind ebenso so auf deren Verwendung anwendbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Vorrichtung für die Anwendung auf einer Schneeoberfläche ausgerüstet,
- Fig. 2: eine Draufsicht einer erfindungsgemässen Vorrichtung für die Anwendung auf einer Schneeoberfläche ausgerüstet,
- Fig. 3: eine untere Ansicht einer erfindungsgemässen Vorrichtung für die Anwendung auf einer Schneeoberfläche ausgerüstet,
- Fig. 4: eine seitliche Ansicht einer erfindungsgemässen Vorrichtung für die Anwendung auf einer Schneeoberfläche ausgerüstet,
- Fig. 5: eine Frontansicht einer erfindungsgemässen Vorrichtung für die Anwendung auf einer Schneeoberfläche ausgerüstet,
- Fig. 6: eine dreidimensionale Ansicht einer erfindungsgemässen Vorrichtung für die Anwendung auf dem Wasser ausgerüstet,
- Fig. 7: eine dreidimensionale Ansicht einer erfindungsgemässen Vorrichtung für die Anwendung auf dem Wasser ausgerüstet,
- Fig. 8: eine untere Ansicht einer erfindungsgemässen Vorrichtung für die Anwendung auf dem Wasser ausgerüstet,
- Fig. 9: eine seitliche Ansicht einer erfindungsgemässen Vorrichtung für die Anwendung auf dem Wasser ausgerüstet und
- Fig. 10: eine Ansicht von hinten einer erfindungsgemässen Vorrichtung für die Anwendung auf dem Wasser ausgerüstet.

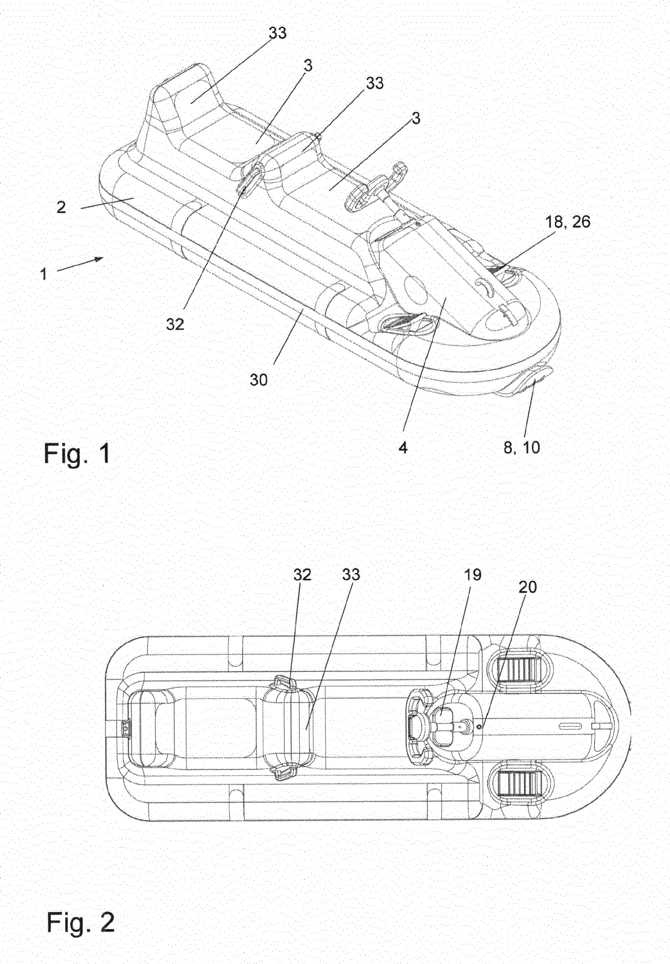

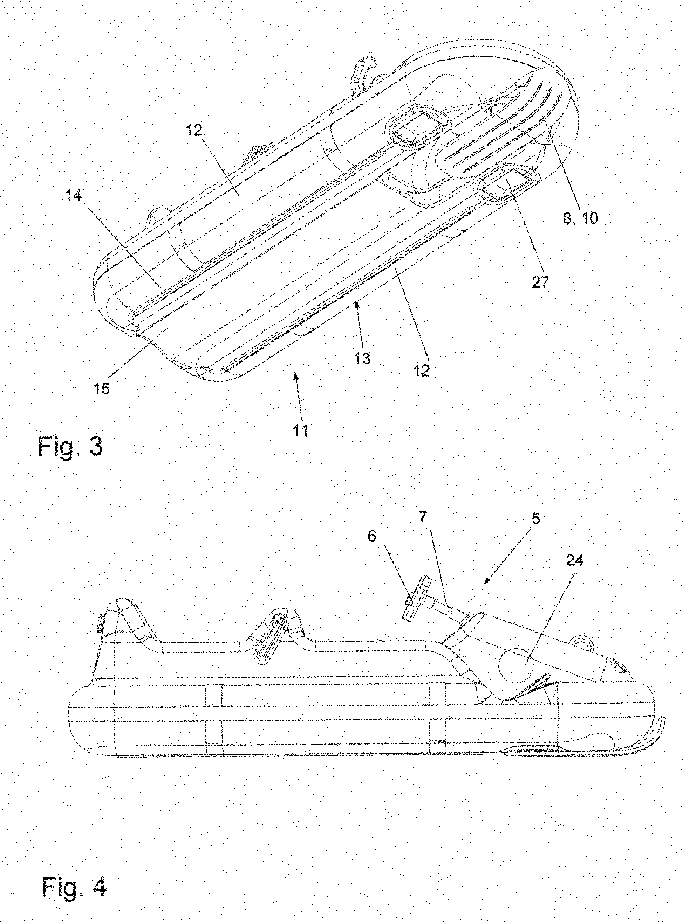

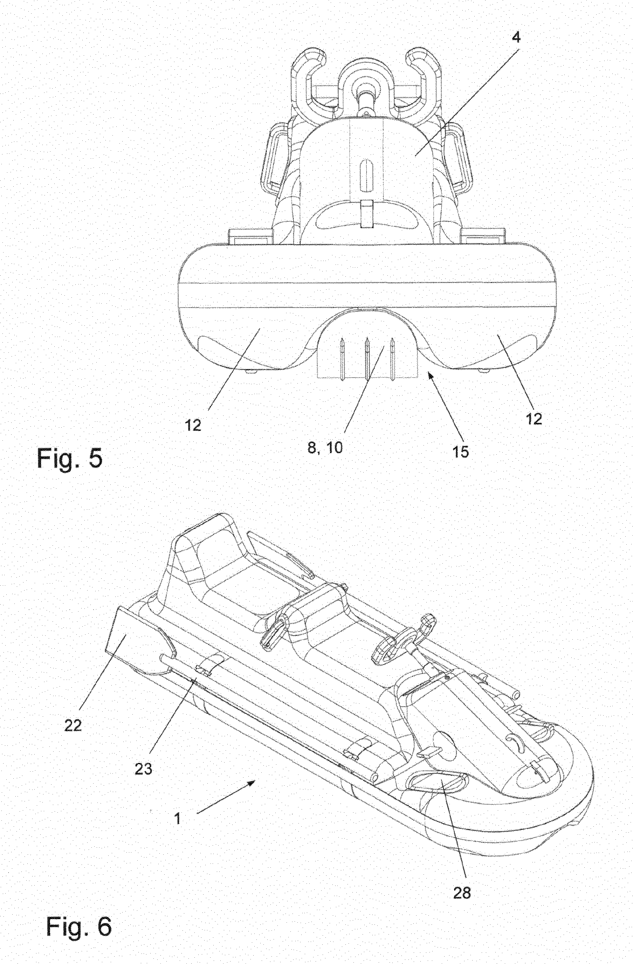

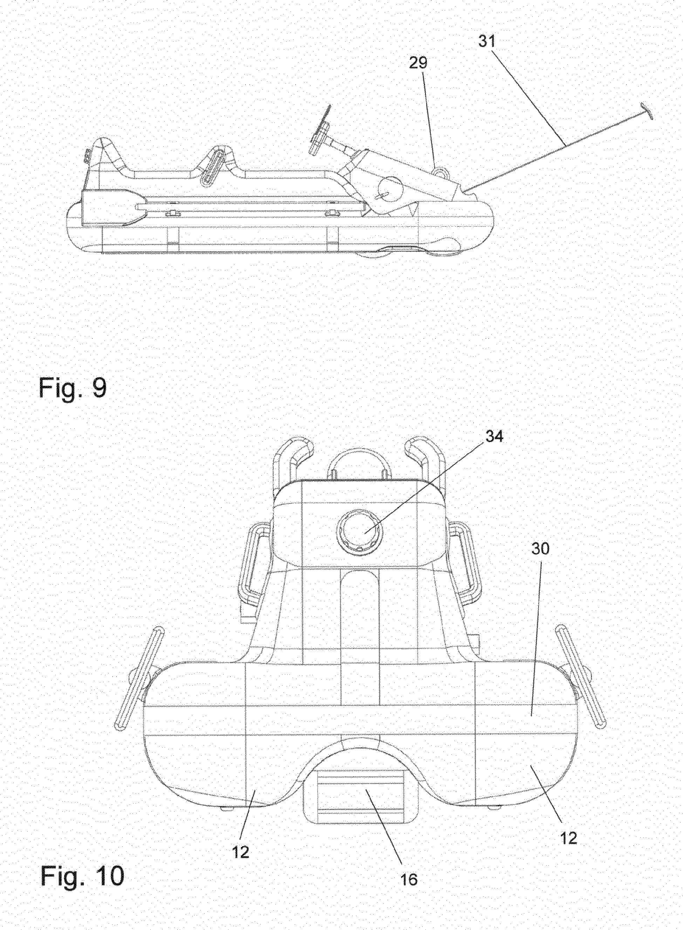

Fig. 1 zeigt die erfindungsgemässe Vorrichtung 1 in einer Ausführungsform wie sie auf einer Schneeoberfläche zum Einsatz kommt. Die Vorrichtung 1 weist einen aufblasbaren Körper 2, auf der in der dargestellten Ausführungsform zwei Sitzflächen 3 aufweist, wobei auch ein Einsitzer oder mehr als zwei Sitzflächen vorstellbar sind. Es ist von Vorteil, wenn an den Sitzflächen 3 Lehnen anschliessen, welche dem Fahrer einen besseren Halt und einen gewissen Komfort bieten. Die erfindungsgemässe Vorrichtung 1 weist ein Cockpit 4 auf, wobei das Cockpit eine stabile Basiseinheit bildet und nicht aufblasbar und somit in seiner Grösse nicht veränderbar ist, wobei das Cockpit 4 vorzugsweise aus einem stabilen Kunststoff ist. Der aufblasbare Körper 2 ist vorzugsweise mit dem Cockpit 4 verbunden bzw. daran befestigt. Die Vorrichtung 1 weist eine Lenkung 5 auf, wobei die Lenkung 5 ein Lenkelement 6 zum Lenken der Vorrichtung 1, eine Lenkstange 7 und ein Richtungsgeberelement 8 beinhaltet. Das Lenkelement 6, welches der Fahrer zum Steuern bedient ist über die Lenkstange 7 abnehmbar mit dem Richtungsgeberelement 8 verbunden, welches ebenfalls abnehmbar an dem anderen Ende der Lenkstange 7 angeordnet ist. Das eingesetzte Richtungsgeberelement 8 gibt den Einsatzbereich der Vorrichtung 1 vor, das heisst ob die erfindungsgemässe Vorrichtung 1 auf einer Schneeoberfläche oder auf dem Wasser zum Einsatz kommt, was jeder Zeit einfach durch den Austausch des Richtungsgeberelements 8 geändert werden kann. Bei der Anwendung auf einer Schneeoberfläche wird eine gleitfähige Sohle 10, vorzugsweise ein Ski eingesetzt, was aus den Figuren 1-5 erkennbar ist. Wird die erfindungsgemässe Vorrichtung 1 dann auf dem Wasser eingesetzt, wird als Richtungsgeberelement 8 ein Ruder 9 am Ende der Lenkstange 7 befestigt. Um den Widerstand der Vorrichtung 1 möglichst gering zu halten und dennoch einen stabilen Aufbau zu haben, weist der aufblasbare Körper 2 zwei parallel verlaufende Rümpfe 12 auf. Die beiden Rümpfe 12 sind an der Unterseite 11 durch eine Vertiefung 15 voneinander beabstandet. Dies gibt dem aufblasbaren Körper 2 eine Rumpfbauform wie die eines Katamarans, dies ist gut aus den Figuren 3, 5, 8 und 10 zu erkennen. Zudem ist es vorteilhaft, wenn die Sitzfläche 3 bzw. Sitzflächen 3 eine sich in der Mitte des aufblasbaren Körpers 2, in Längsrichtung erstreckende, erhabene Oberfläche ist, wobei die Sitzfläche 3 gegenüber dem Rumpf 12 bzw. den beiden parallel verlaufenden Rümpfen 12 erhaben ist. Die Sitzfläche 3 ist somit vorzugsweise als sich in der Mitte erstreckende Sitzbank ausgebildet. Dies ermöglicht eine komfortable Sitzposition für den Fahrer und Mitfahrer da die Füsse auf den Rümpfen 12 oder die dafür vorgesehen Blenden 28 oder Bremspedalen 26 abgestellt werden können.
Der aufblasbare Körper 2 beinhaltet vorzugsweise die beiden Rümpfe 12, welche sich parallel erstecken und eine Vertiefung 15, welche sich kanalartig an der Unterseite 11 zwischen den beiden Rümpfen 12 erstreckt, sowie eine Sitzfläche 3 und eine abgerundete Front in die die beiden Rümpfe 12 übergehen.

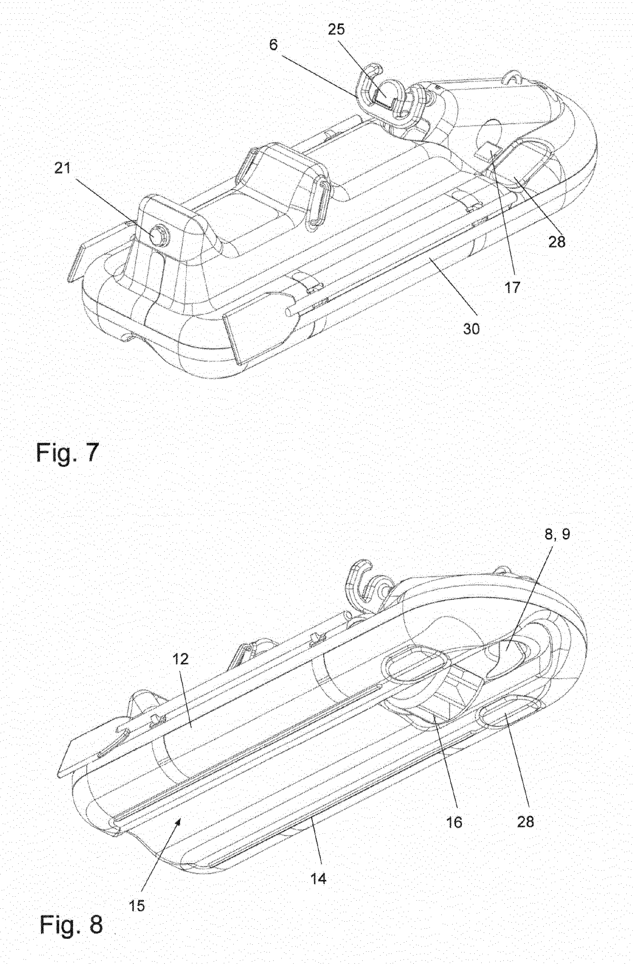

Es hat sich als vorteilhaft gezeigt, wenn der gesamte, aufblasbare Körper 2 als eine Luftkammer ausgebildet ist. Dies hat den Vorteil, dass überall der gleiche Innendruck herrscht und der aufblasbare Körper 2 nur ein Ventil 21 aufweist an dem der Körper 2 aufgeblasen werden muss. Vorzugsweise ist dieses an der Rückseite des Körpers 2 angeordnet, was gut aus Fig. 7 zu erkennen ist.
Bevorzugterweise weist der aufblasbare Körper 2 an seiner Unterseite 11 bzw. an der Unterseite der Rümpfe 13 eine Verstärkung 14 auf. Die Verstärkung 14 ist ein zusätzliches Material bzw. eine weitere Schicht, welche auf die Unterseite der Rümpfe 13 appliziert ist, damit Steine oder sonstige harte und scharfe Oberflächen keine Löcher in den aufblasbaren Körper 2 aus Kunststoff reissen.
Es hat sich als vorteilhaft gezeigt, wenn sich entlang des Umfangs des aufblasbaren Körpers 2 ein Band 30 zur Verstärkung des Körpers 2 erstreckt. Das Band 30 ist vorzugsweise aus Stoff hergestellt und verbessert die Stabilität.
Zur Verwendung der Vorrichtung 1 auf der Schneeoberfläche ist es von Vorteil, wenn Fussbremsen 18 vorhanden sind um die Vorrichtung 1 bei einer steilen Abfahrt gut stoppen zu können. Die Fussbremsen 18 sind im vorderen Bereich der Vorrichtung 1 neben dem Cockpit 4 angeordnet, dass der Fahrer seine Füsse gut darauf platzieren kann. In Fig. 1 sind die Bremspedalen 26 gut ersichtlich, welche dann die ausgeübte Kraft des Fahrers auf die Bremse 27 an der Unterseite 11 übertragen, die dann zum Stoppen im Schnee greifen. Beim Einsatz auf dem Wasser wird die Öffnung der Fussbremsen 18 durch Blenden 28 ersetzt, sowohl auf der Unterseite 11 wie auch auf der Oberseite, welche dann auch zum Abstellen der Füsse geeignet ist.
In einer bevorzugten Ausführungsform weist die Vorrichtung 1 Haltegriffe 32 auf an denen sich Mitfahrer festhalten können, vorzugsweise sind die Haltegriffe 32 an einer gut zugänglichen Position angeordnet, was meist auf der Seite der Lehnen 33 des Fahrersitzes ist.
Zur Verstauung von Gegenständen weist das Cockpit 4 vorzugsweise ein Ablagefach 19 auf, welches unter dem Lenkelement 6 platziert ist. Als weiteren Zusatz weist eine bevorzugte Ausführungsform ein Gewinde 20 am Cockpit auf in das eine Halterung für eine Kamera angebracht werden kann um während der Fahrt Bilder oder Videos zu erstellen.
Es hat sich auch als vorteilhaft gezeigt, wenn am Lenkelement 6 bzw. Steuerrad eine Halterung 25 für ein portables Anzeigegerät bzw. Handy angeordnet ist, was gut aus Fig. 7 zu erkennen ist.
Wird nun die erfindungsgemässe Vorrichtung 1 wie sie in den Figuren 1 bis 5 dargestellt ist von der Anwendung auf einer Schneeoberfläche für die Anwendung auf dem Wasser umgerüstet, muss nur die Sohle respektive der Ski 10 durch das Ruder 9 ersetzt werden, wodurch die Vorrichtung 1 wieder auf dem entsprechenden Untergrund lenkbar ist, was gut aus den Figuren 3 und 8 ersichtlich ist.

Des Weiteren ist es vorteilhaft, wenn zum Antrieb auf dem Wasser ein Antriebsrad 16 eingesetzt wird, wie in Fig. 8 ersichtlich. Dieses wird dann mit Pedalen 17 die seitlich aus dem Cockpit 4 herausragen angetrieben, wodurch die erfindungsgemässe Vorrichtung 1 zu einer Art Tretboot wird. Die Pedalen 17 können bei Nichtgebrauch ebenfalls demontiert werden und durch Blenden 24 wird die Öffnung abgedeckt. Alternativ kann die Vorrichtung 1 auch mit Paddeln 22 fortbewegt werden, die vorzugsweise mittels Haltern 23 auf der Seite der Rümpfe 12 befestigt sind.
In einer bevorzugten Ausgestaltung weist die Vorrichtung 1 einen Haken 29 der am Cockpit 4 angeordnet ist auf, der beispielsweise zum Befestigen an einer Abschleppvorrichtung dient, wie auch die allgemeine Handhabung der Vorrichtung 1 dadurch erleichtert wird.
Als weitere vorteilhafte Ausgestaltung hat sich die Anordnung eines Zugseils 31 am Cockpit 4 gezeigt. Dies ermöglicht ein einfaches Ziehen oder Abschleppen der Vorrichtung 1 ohne, dass ein zusätzliches Seil dazu benötigt wird. Durch das automatische Aufrollen des Zugseils 31 ist es auch bei Nichtgebrauch optimal im Cockpit 4 verstaut.

### Bezugszeichenliste

- 1: Vorrichtung
- 2: Aufblasbarer Körper
- 3: Sitzfläche
- 4: Cockpit
- 5: Lenkung
- 6: Lenkelement
- 7: Lenkstange
- 8: Richtungsgeberelement
- 9: Ruder
- 10: Sohle/Ski
- 11: Unterseite
- 12: Rumpf
- 13: Unterseite Rumpf
- 14: Verstärkung
- 15: Vertiefung
- 16: Antriebsrad
- 17: Pedale
- 18: Fussbremse
- 19: Ablagefach
- 20: Gewinde
- 21: Ventil
- 22: Paddel
- 23: Halter für Paddel
- 24: Blende
- 25: Halterung
- 26: Bremspedal
- 27: Bremse
- 28: Blende
- 29: Haken
- 30: Band
- 31: Zugseil
- 32: Haltegriff
- 33: Lehne

## Patentansprüche

1. Vorrichtung (1) zur Fortbewegung auf einer Schneeoberfläche und/oder auf Wasser enthaltend, einen aufblasbaren Körper (2), wobei der Körper (2) im aufgeblasenen Zustand mindestens eine Sitzfläche (3) aufweist, ein Cockpit (4), wobei das Cockpit (4) eine stabile Basiseinheit bildet, eine Lenkung (5), wobei die Lenkung (5) ein Lenkelement (6), eine Lenkstange (7) und ein Richtungsgeberelement (8) aufweist und das Richtungsgeberelement (8) über die Lenkstange (7) mit dem Lenkelement (6) verbunden ist, wobei das Richtungsgeberelement (8) den Einsatzbereich ob auf einer Schneeoberfläche oder auf Wasser vorgibt, **dadurch gekennzeichnet, dass** das Richtungsgeberelement (8) austauschbar an der Lenkstange (7) angeordnet ist und entsprechend des Einsatzbereichs als Ruder (9) oder gleitfähige Sohle (10) ausgebildet ist.

2. Vorrichtung (1) nach Anspruch 1, **dadurch gekennzeichnet, dass** die gleitfähige Sohle als Ski (10) ausgebildet ist.

3. Vorrichtung (1) nach einem der Ansprüche 1 oder 2, **dadurch gekennzeichnet, dass** der aufblasbare Körper (2) zwei parallel verlaufende Rümpfe (12) aufweist und sich an der Unterseite (11) des aufblasbaren Körpers (2) zwischen den beiden Rümpfen (12) eine Vertiefung (15) erstreckt.

4. Vorrichtung (1) nach einem der Ansprüche 1 bis 3, **dadurch gekennzeichnet, dass** der aufblasbare Körper (2) als eine Luftkammer ausgebildet ist.

5. Vorrichtung (1) nach einem der Ansprüche 1 bis 4, **dadurch gekennzeichnet**, das die Sitzfläche (3) des aufblasbaren Körpers (2) durch eine sich in der Mitte in Längsrichtung erstreckende, erhabene Oberfläche gebildet ist.

6. Vorrichtung (1) nach einem der Ansprüche 1 bis 5, **dadurch gekennzeichnet, dass** sich entlang des Aussenumfangs des aufblasbaren Körpers (2) ein Band (30) zur Verstärkung erstreckt.

7. Vorrichtung (1) nach einem der Ansprüche 1 bis 6, **dadurch gekennzeichnet, dass** das Cockpit (4) als stabiles Kunststoffteil ausgebildet ist, wobei die Lenkstange (7) durch das Cockpit (4) hindurchragt.

8. Vorrichtung (1) nach einem der Ansprüche 1 bis 7, **dadurch gekennzeichnet, dass** der aufblasbare Körper (2) ein Ventil (21) zum aufblasen aufweist.

9. Vorrichtung (1) nach einem der Ansprüche 1 bis 8, **dadurch gekennzeichnet, dass** die Unterseite der beiden parallel verlaufenden Rümpfe (13) eine Verstärkung (14) aufweist.

10. Vorrichtung (1) nach einem der Ansprüche 1 bis 9, **dadurch gekennzeichnet, dass** im Cockpit (4) ein einsetzbares Antriebsrad (16) angeordnet ist.

11. Vorrichtung (1) nach Anspruch 10, **dadurch gekennzeichnet, dass** das Antriebsrad (16) mit Pedalen (17) zum Antreiben verbunden ist.

12. Vorrichtung (1) nach einem der Ansprüche 1 bis 11, **dadurch gekennzeichnet, dass** die Vorrichtung (1) einsetzbare Fussbremsen (18) aufweist

13. Verwendung einer Vorrichtung (1) nach einem der Ansprüche 1 bis 12 **dadurch gekennzeichnet, dass** die Vorrichtung (1) auf Wasser und einer Schneeoberfläche einsetzbar ist, wobei entsprechend des Einsatzbereichs als Richtungsgeberelement (8) ein Ruder (9) oder eine gleitfähige Sohle (10) an der Lenkstange (7) angeordnet ist und das Ruder (9) und die gleitfähige Sohle (10) gegenseitig austauschbar sind
